# EUROPEAN PATENT APPLICATION

(11) **EP 1 652 576 A2**
(43) Date of publication of application: **03.05.2006**
(21) Application number: 05077858.8
(22) Date of filing: 16.09.1999
(51) Int. Cl.: B01J 8/38, B01J 8/44, B01J 8/24

(54) **Particle treatment in a toroidal bed reactor**

(30) Priority: 18.09.1998 CA 2247758
(62) Divisional of application: 99944183.5
(71) Applicant: MORTIMER TECHNOLOGY HOLDINGS LIMITED, Reading RG7 3S7 (GB)
(72) Inventor: Dodson, Christopher E., Oakville, Ontario L6H 4B2 (CA)
(74) Representative: Van Malderen, Joelle

(57) **Abstract**

The invention provides a process and apparatus for treating particulate material in a stream of fluid which is directed into a toroidal zone to create a toroidal bed of the material. Particulates in the bed move in a generally helical fashion within the bed and can be entered and removed in a variety of ways depending upon the requirements of the process. The toroidal bed has a generally triangular cross-section with the radial width of the bed being in the range of about 2 to 20 percent of the outer diameter of the zone. The depth of the bed at the outer extremity of the bed is in the range of about 2 to 5 percent of the zone outer diameter, and the depth at the inner extremity is less than 1 percent of the outer diameter. The bed provides improved particle treatment.

## Description

### Technical Field

This invention relates to improvements to a process and apparatus used to treat a particulate material in a flow of fluid which develops a circumferentially circulating turbulent toroidal bed of material within a processing zone.

### Background Art

It has been thought for some time that the best mode for treating beds of particulate material is to fluidize the bed with a gaseous stream. Fluidization of the bed usually results in the particulate material moving randomly in the bed and resembling a random motion similar to boiling water. Exemplary systems are found in U.S. Patents 3,527,575; 4,067,118; 4,530,169; 4,970,804; 5,282,321 and 5,357,688. The fluidized beds of these references are of the standard upwardly expanded type which may optionally involve a swirling motion in the bed as developed by angled jets of fluid.

A vertically expanded annular bed of material is described in U.S. patent 5,033,205. The circulation of the particulate material in the annular bed is upwardly then outwardly for return to the lower air jet portion of the bed.

An alternative approach is to be found in U.S. Patent 4,479,920 which describes an annular processing zone for a circumferentially circulating turbulent toroidal bed of material. The system is available commercially under the trade mark TORBED and has been used in a variety of particulate treatment applications such as metal ore treatment and roasting; catalytic particle treatment; drying of particulate matter; reacting particles with a gaseous stream; tablet coating; coffee bean roasting and the like. Although this type of annular processing zone is very effective and efficient in treating particulate material due to the random motion of the particles in the swirling turbulent annular bed of material, there may be situations when not all particles in the bed are evenly treated and hence a variation in the quality of the product.

It is among the objects of the present invention to use a fluid stream to provide a predictable particle flow path in a toroidal bed to ensure a more uniform particle treatment for a given residence time.

### Disclosure of Invention

In accordance with the invention, a process of the invention provides a process and apparatus for treating particulate material in a stream of fluid which is directed into a toroidal zone to create a toroidal bed of the material. Particulates in the bed move in a generally helical fashion within the bed and can be entered and removed in a variety of ways depending upon the requirements of the process. The toroidal bed has a generally triangular cross-section wit the radial width of the bed being in the range of about 2 to 20 percent of the outer diameter of the zone. The depth of the bed at the outer extremity of the bed is in the range of about 2 to 5 percent of the zone outer diameter, and the depth at the inner extremity is less than 1 percent of the outer diameter. The bed provides improved particle treatment.

### Brief Description of the Drawings

Preferred embodiments of the invention are shown in the drawings in which:

Figure 1 is a vertical section through a pilot plant reactor designed to run a variety of processes which incorporate the present invention, the section including two forms of cone structure drawn one to each side of a vertical axis;

Figure 2 is a enlarged view of part of Figure 1 and showing the cone structures and an annular processing zone;

Figure 3 is a diagrammatic section through the annular processing zone to illustrate particle movement;

Figures 4A, 4B and 4C are respective front, top and side views of blades used in the base of the processing zone;

Figure 5 is an isometric view showing the relationship between the blades; and

Figure 6 is a view similar to Fig. 5 and showing an alternative embodiment for the blades.

### Best Mode for Carrying out Invention

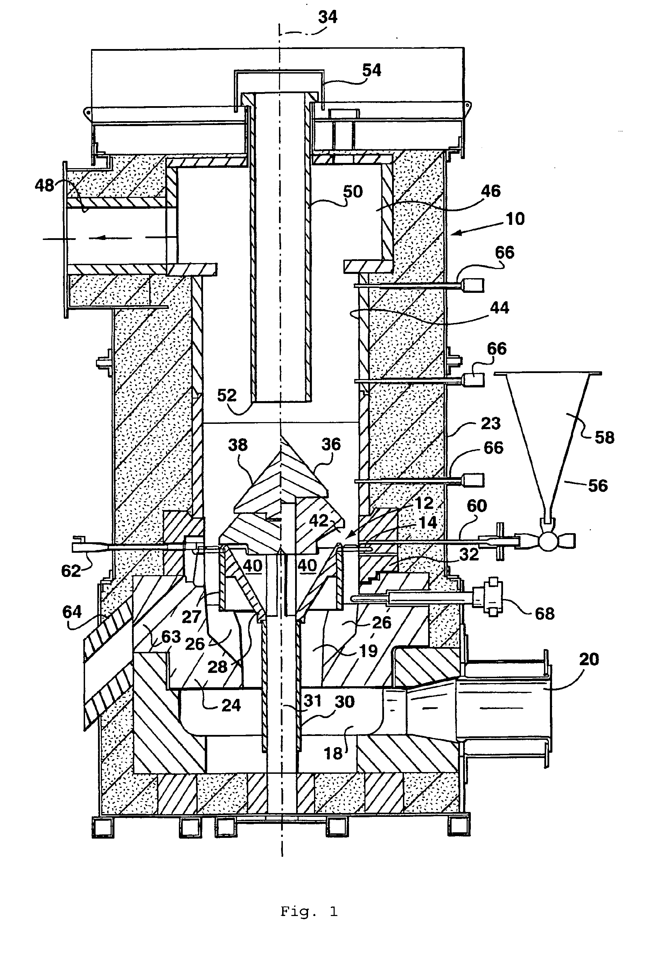

Reference is first made to Figure 1 which illustrates a pilot plant reactor designated generally by the numeral 10, and which is capable of use in a variety of ways consistent with the generation of a toroidal bed generated by a flow of fluid, which is most usually gas, but may be liquid, steam or a vapour.

With reference to Figure 1, the reactor 10 has an annular processing zone 12 provided above an annular array of equally spaced blades 14 forming a base of the zone 12. Processing fluid is introduced via a plenum 20 tangentially into a mixing chamber 18 where heat may be provided from optional burners to heat the incoming fluid to the desired treatment temperature if ambient temperature is not sufficient. On the other hand, if necessary, the fluid may be cooled below ambient temperature as needed.

The swirling process fluid in the mixing chamber 18 leaves upwardly through an annular passage 19 before passing between the blades 14. As will be described, the blades 14 are angled to give the flow of fluid a horizontal component which develops a circumferentially circulating bed of material.

Before describing the preferred geometry of the bed, examples of the various processes which can take advantage of such a bed will be mentioned with reference to the pilot plant reactor 10 which can be used for such processes.

Firstly, a bed can be created simply by adding particles to be treated and withdrawing the treated particles either by entrapment in the fluid flow, or by collecting the particles after a residence time sufficient for treatment. The process is fed by more of the same particles.

In a second use, a resident bed is used and the particles to be treated are fed to the bed and withdrawn after treatment, again by entrapment or collection directly from the bed.

A third variation is to provide a bed of material which is replenished as the particles being treated are passed through the bed.

This allows the bed material to be used to maintain a steady temperature in the bed in both exothermic and endothermic processes.

As mentioned, all of these exemplary processes can take advantage of the present invention. The pilot reactor will now be described in more detail.

The reactor 10 has an outer casing 23 containing insulation about the reactor proper which will now be described by following fluid entering the plenum 20 and passing through the reactor. It will be appreciated that where necessary, parts of the reactor will be made either of high quality silicon carbide steel or ceramics to withstand the temperatures created within the reactor.

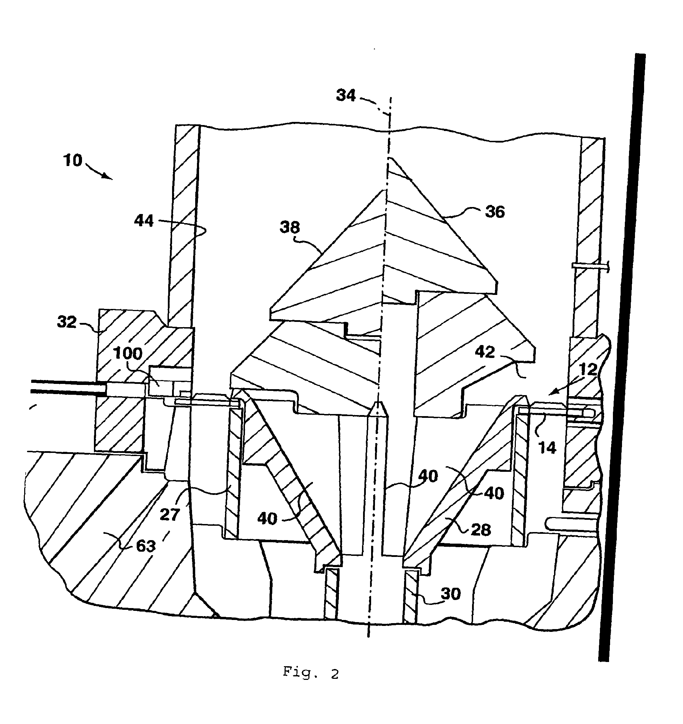

The mixing chamber 18 supports an annular spacer 24 defining the annular passage 19 and including four radial internal webs 26 which provide clearance for passage of the fluid while supporting an annular inner blade support 27 which supports inner radial extremities of the blades 14. These features can also be seen in greater detail in Figure 2.

The fluid leaving the passage 19 is directed past the webs 26 and outside the blade support 27 by an outer surface of a frusto-conical funnel 28 which is supported on a central outlet tube 30, which in turn is carried by structure defining the mixing chamber 18. The outlet tube 30 forms part of an outlet passage 31 which is an optional outlet for particulate material depending upon the process being used as will be described.

The blades 14 rest on the inner blade support 27 and extend radially outwardly to be supported on an outer blade retainer 32 which in turn rests on and is located by the spacer 24. It will be appreciated that the fits between parts must be chosen to allow for differential expansion and contraction due to the temperature changes inherent in a reactor.

The outer blade retainer 32 has a cylindrical inner surface which defines the outer boundary of the processing zone 12. As will be described, the zone 12 is effectively defined by the base of the zone (the blades 14) and the outer wall of the zone with the material being maintained in the zone by the action of the fluid fed to the zone through the blades 14. The structure of the pilot plant reactor 10 will be completed before describing the zone.

A vertical axis 34 of Figure 1 both indicates that the reactor is generally cylindrical and also provides a separation to the right and left to show in the same figure two possible cone structures 36 and 38. The cone structure 36 is made up of two parts for the sake of convenience and the assembly sits on four suitably shaped and separated fins 40 defined on an inner surface of the funnel 28. The result is an annular gap 42 between the funnel 28 and the cone structure 36 to provide downward flow from the zone 12 to the downwardly extending outlet passage 31 for removing material from the zone when the process calls for such removal. By contrast, the cone structure 38 is designed to sit on the fins 40 and also on the top of the funnel 28 to seal the passage 31. Obviously the cone structure 38 would be used in processes where material is not removed from the zone centrally and downwardly.

Fluid, and in some instances treated material, will flow upwardly from the zone 12 through a tubular duct 44 leading to an exhaust chamber 46 and hence to an exhaust outlet 48.

As mentioned, the reactor 10 is a pilot plant reactor and can be modified for different processes. To this end, a feed tube 50 extends downwardly from the top of the reactor along the axis 34 to terminate at a lower end 52 above the cone structures 36, 38 (one of which will be used in any given process). A cap 54 is provided at the outer end of feed tube 50 to close the tube when not in use.

Another optional structure is a particle feeder 56 positioned to make use of an air supply (not shown) to feed fine particles from a hopper 58 through an injector tube 60 into the zone 12. This structure will of course be suitable only for fine particles such as powders. Larger particles would be fed downwardly through the feed tube 50.

Figure 1 also shows an optional controlled outlet structure 62 arranged to selectively remove particles from the zone. Normally air pressure is applied in the structure 62 to prevent particles from the zone 12 flows through the structure. If the pressure is reduced, particles will pass from the bottom of the zone 12 into an exit passageway 63 formed in the outer blade retainer 32, annular spacer 22, and a tube 64 passing through the insulation and the casing 23.

As is common in structures of this kind, control devices are included and exemplary devices are indicated by probes 66 and a thermocouple detector 68.

It will now be apparent that the pilot plant reactor 10 can be adjusted for use with different processes as previously mentioned. All of these processes will include an annular processing zone 12, blades 14, and a fluid directed upwardly through the blades and subsequently exhausted with or without treated material.

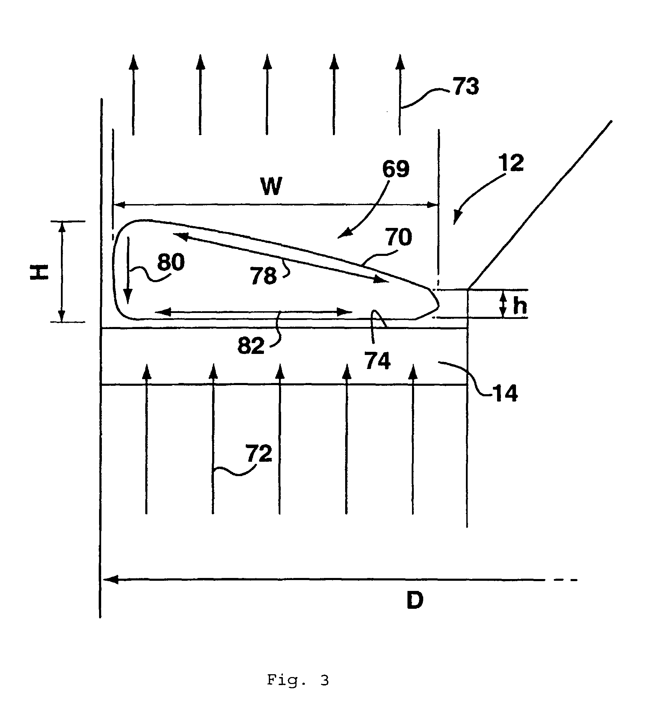

Reference is next made to Figure 3 which illustrates diagrammatically a predictable particle flow pattern achieved by directing the flow of fluid through the blades 14 in a preferred manner to develop a circulating bed 69 in the processing zone 12. The outer diameter of the bed is indicated by the letter "D" and the width of the bed 69 (i.e. the measurement made radially) and indicated by the letter "W", is preferably in the range of 2 to 20 percent of bed diameter D. The generally triangular cross-sectional shape of the bed 69 includes an outer axial height indicated by the letter "H" which is preferably in the order of 2 to 5 percent of bed diameter D and an upper surface 70 of the bed extends radially inwards at an angle of about 30 degrees below the horizontal to define a minimal inner bed depth of less than 1 percent of the bed diameter D.

It has been found that with these cross-sectional dimensions for the bed, particle flow can be generated which is best described as "helical" in the sense that the particles will spiral as they move annularly around the cone structure such as cone structure 38. As seen in Figure 3, the processing fluid engages the blades 14 in a upward flow indicated by arrow 72, passes between the blades 14 where it is deflected, and continues upwardly and angularly to enter the bed 69 where it surrenders kinetic energy to the particles in the bed before exiting in the direction of arrows 73. The flow of fluid is directed at an angle relative to the processing zone base (indicated generally by the numeral 74 and made up essentially of the blades) in the range of about 10 degrees to 45 degrees to the horizontal.

In those processes in which the particles are not intended to leave entrapped in the fluid exhaust, the velocity of the processing fluid at the point of impact on the underside of the bed 69 is selected to be greater than the terminal velocity of the largest particles in the bed 69 to maintain the particles in the bed, and the fluid leaving the bed will have a velocity less than the terminal velocity of the smallest particles so that these particles will remain in the bed 68. However, it will be appreciated that in other processes, if particles are to be entrapped in the fluid, then the terminal velocity of the particles to be moved with the fluid will be less than the velocity of the fluid leaving the zone.

It has been found that the distribution of the processing fluid as it leaves the blades 14 and the angle of impingement with the zone 12 must be related to the type of fluid and to the fluid velocity in proportions which achieve the controlled and predictable flow of particles within the bed 104. This of course must be matched to the types of particles being treated and the effect required.

Consider now the particles in the bed. As mentioned, the velocity of the fluid flow is such that the terminal velocities of larger particles are less than the velocity of the fluid under the bed to maintain those particles in the bed. As energy is transferred from the fluid to the particles, the particles are made to move in the aforementioned helical pattern indicated in two dimensions by the arrows 78, 80 and 82. It must be appreciated that the motion is also annular (i.e. into the plane of the paper) and that this peripheral movement is superimposed on the two-dimensional view shown in Figure 3. Consequently, as the particles are moving and following the arrows, they are also passing around the zone in an annular fashion affected by centrifugal force. The result of this motion is to create a zone in the shape shown and described. If the parameters are arranged to create a zone in which the proportions are those given, then the particles are treated in an optimized manner. This is predictable and although it will require some selection of variables, if the proportions are met, then optimum treatment will result.

It will now be clear that the functional relationships between the particles to be treated, blade angles, type of fluid, fluid velocities, volumetric flow, etc. are selected such that the kinetic energy change that occurs when the processing fluid meets the bed, must be sufficient to maintain the processing bed in motion both circumferentially and helically and maintain the particles in the bed. As the processing bed depth increases with increasing bed diameter, the kinetic energy delivered must increase in due proportion.

It will be appreciated that as the fluid passes through the blades 14, the fluid will elevate the particles at the inner region and direct them tangentially of the circumferential flow so that the particles assume a component of directional flow as indicated by arrow 78. The particles lose momentum as they reach an area of the process chamber where the kinetic energy of the fluid flow is low enough to allow the particles to return to the general flow path and downwardly of the bed 69 as indicated by arrow 80. By displacement, the particles then move back towards the inner portion of the bed as indicated by arrow 82. Hence the particles are travelling circumferentially of the processing zone and at the same time are circulating in the direction of arrows 78, 80 and 82 to in essence provide a helical motion for the particles as the bed circulates.

The functional relationship of the blade angle and gas velocities and volumes are selected such that the kinetic energy change that occurs when the processing fluid leaving the blades 14 and impacts on the underside of the processing bed base above must be sufficient to maintain the processing bed in motion both circumferentially and helically.

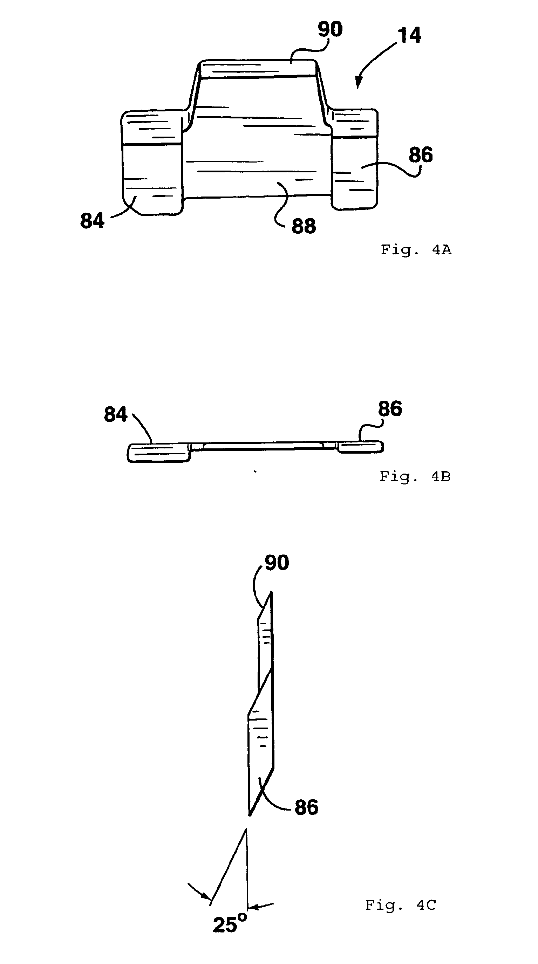

As the processing bed depth increases with increase in bed diameter, the kinetic energy delivered must increase in due proportion. As shown in Figures 4A, B and C a preferred shape of blade is shown. Each blade generally designated 14 has inner and outer portions 84 and 86 with a recessed central channel 88 terminating in a raised blade surface 90. As shown in Figure 4B, outer portion 84 is thicker than inner portion 86 to accommodate the increase in circumference from the inner to the outer portion.

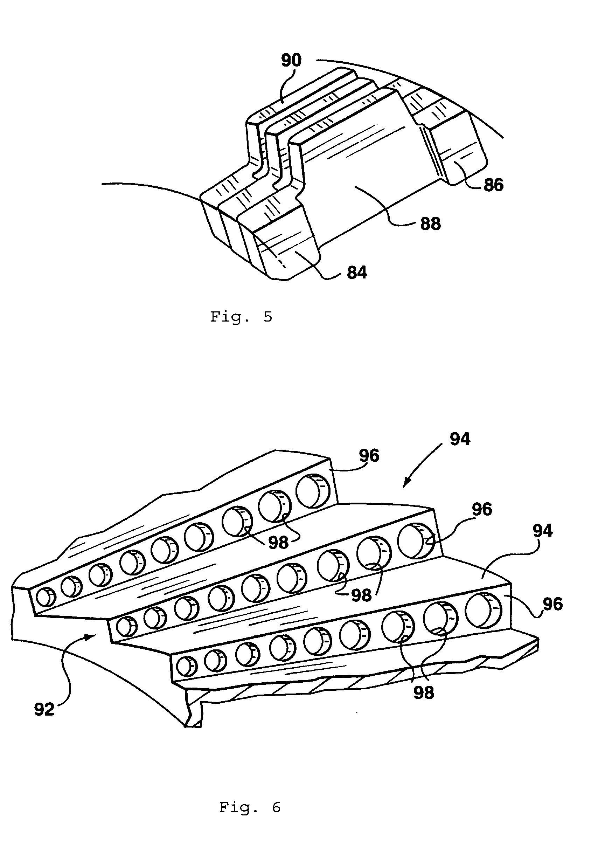

With reference to Figure 5 each blade 14 extends radially outwardly and hence the spacing between each blade is determined by portions 84 and 86 that meet adjacent similar portions to give equal spacing between the blades 14. As a result the opening between the blades for fluid flow is somewhat pie-shaped to provide a greater volume of processing fluid at the outer extremity of the bed where the bed is deepest.

In order to direct the angle of the processing fluid flow, the blade is shaped such that when the blade is placed on the inner blade support 27 and blade retainer 32 the required processing fluid or gas flow direction is achieved. The preferred angle for the blade is in the range of about 10 to 45 degrees and most preferably a blade angle of about 25 degrees as illustrated in Figure 4C.

An alternative embodiment for the blades 14 is shown in Figure 6. In this case the processing bed is defined at its base by a complex shaped air distribution system 92 which has sequentially raised portions 94 with vertical faces 96 each of which defines a plurality of radially aligned holes 98 having diameters which increase in the outward radial direction. These holes act like nozzles to provide the desired fluid flow which increases with distance from the centre line of the reactor to meet the requirement that the bed be supported evenly across its changing depth.

Other alternative configurations include a set of turbine blades where the blades are rotating about the centre line of the reactor and are profiled so as to achieve mass flow distribution along the blade increasing in proportion with distance from the centre line of the circular reactor. Alternatively the outlet spin and direction of fluid flow generated by a centrifugal fan or axial flow fan impeller blade may be used to provide the direction of fluid flow pattern required with or without appropriately shaped vanes to distribute the flow in the correct proportion across the annular chamber base.

It is understood that the blade structures as needed for high temperature operation may be made of ceramic and are designed to expand and contract without restriction. The central discharge through passage 31 is a significant advantage over the prior system of applicant as described in U.S. patent 4,479,920. The bed may be forced to discharge through passage 31 without disturbing the preferred controlled flow pattern of the particles in the bed as described with respect to Figure 3. As particles are added to and are retained within the compact bed they initially circulate adjacent to the outer wall of the chamber.

As more particles are added the bed expands radially inwards of the processing zone 12 (Figure 1) to meet the gap 42 and enter the outlet passage 31. The fluid flow is insufficient adjacent the gap 42 to support particles above the bed base and hence gravity is used to discharge particles from the bed to flow through passage 31.

An alternative exit for the particles from the bed is provided in association with the controlled outlet structure 62 (Figure 2). A particulate material outlet is provided at 100 in the form of an outlet or opening in the outside wall directly adjacent to the point of impact of the process fluid on the underside of the outer extremity of the bed of particles. As the particles enter the reactor to be processed, the mass in the bed increases and thus the bed drops and circulates closer to the point of impact of the process fluid as the fluid leaves the gaps between the blades 14. As the lowermost part of the bed of particles drops below the upper edge of the outlet 100, particles will leave the process chamber through the outlet 100. As a result, the mass of the bed decreases allowing the bed to rise thereby cutting off the supply of particles from the outlet 100 to end the flow. By this means a continuous or batch displacement of particles may be achieved through the bed in a controlled and predictable manner. Further in this arrangement, the flow is self regulating because if the flow of material to the bed ends, the discharge of particles will cease until more material is supplied to start the flow through the passage 31 again.

### Industrial Applicability

In accordance with a preferred aspect of the invention the apparatus and process of this invention may be used to treat catalytic particles through hydrocarbons from the surface thereof. Such an example of the use of this technique is in the recovery of valuable metals from spent catalysts.

The spent catalyst is no longer capable of sufficient catalysis to be economical and so is sent for recovery of the precious group metals (PGMs) contained within the catalyst substrate. The spent catalyst typically comprises a porous alumina substrate whose pores are clogged with carbon and hydrocarbons in combination at up to 50% w/w. In order to recover the PGMs, the alumina is dissolved chemically as a first step. Significant quantities of carbon or hydrocarbons (more than 5%) hinder the chemical extraction process and thus combustion is used to remove the hydrocarbon and carbon from the catalyst. If the combustion is uncontrolled, the alumina substrate is calcined to sufficient temperature (> 1,000°C) that it changes its crystal phase which reduces the solubility of the alumina and thus reduces the effectiveness of the existing leaching processes.

In this application of the process, a compact bed was formed with a width of 7-10% of reactor diameter, a height at the outside wall of between 2-5% of reactor diameter and at the inside wall a height of less than 1% of reactor diameter. The blades were formed with the slot through which the process fluid - in this case air - was passed opening radially with a free area percentage of 20%.

The mixing of the bed was rapid and uniform such that the catalyst particle temperature was sufficiently controlled within a 750-800 degrees C temperature band to prevent the alumina crystal change due to uncontrolled combustion and yet to remove the hydrocarbons completely and the carbon to less than 5% w/w.

Although preferred embodiments of the invention have been described herein in detail, it will be understood by those skilled in the art that variations may be made thereto without departing from the spirit of the invention or the scope of the appended claims.

## Claims

1. Apparatus of the type used to process particulate material in a stream of fluid and having:
- an annular processing zone including a base;
- fluid inlets at the base of the zone arranged to direct fluid into the annular treatment zone to meet particulate material in the zone;
- the processing zone being shaped to maintain a circumferentially circulating turbulent band within the processing zone in response to the flow of fluid;
- **characterised in that** the processing zone is proportioned to provide a predictable particle flow path both circumferentially of the processing zone and helically of the zone with the following characteristics:
(i) the fluid flow creates a circulating bed of particulate material which has a width between about 2% to 20% of the bed outer extremity diameter, an inner bed depth of less than 1% of the bed diameter, and an outer bed depth between about 2% to 5% of the bed diameter; and
(ii) the flow of fluid is directed at an angle relative to the base of the processing zone in the range of about 10° to 45°.

2. Apparatus as claimed in claim 1 in which the fluid velocity is controlled so that it is greater than the terminal velocity of larger particles at point of impact on the base of the bed and less than the terminal velocity of smaller particles in the space above the bed upper surface.

3. Apparatus as claimed in claim 2 in which the fluid inlets develop a circulating bed of particulate material which has a width of about 5% to 15% of the zone diameter.

4. A process of the type used to bring particulate material into contact with a moving fluid in an annular processing zone having a base, the process including the steps:
- supplying the particulate material to the processing zone;
- generating a circumferentially directed flow of gas in the zone to develop a circumferentially circulating turbulent bed of particulate material moving within the processing zone about a vertical axis,and
- discharging processed particulate material from the processing zone;
- **characterised in that** the particulate material is circulated in the processing zone in a predictable particle flow path both circumferentially of the processing zone and helically of the zone to define a circulating bed with the following characteristics:
(i) the flow of fluid is controlled to develop the circulating bed with radial width between about 2% to 20% of the outer diameter of the bed, an inner bed depth of less than 1% of the bed diameter; and an outer axial height between about 2% to 5% of the outer bed diameter; and
(ii) the flow of fluid is directed at an angle relative to the base of the processing zone in the range of about 10° to 45° to the horizontal.

5. a process as claimed in claim 4 in which the fluid velocity is controlled so that it is greater than the terminal velocity of larger particles at point of impact on the base of the bed and less than ther terminal velocity of smaller particles in the space above the bed upper surface.

6. A process as claimed in claim 4 in which said radial width of the bed is about 5% to 15% of said outer diameter of the bed.

7. A process as claimed in claim 4 in which the flow of fluid is directed by a plurality of outwardly radiating inclined vanes spaced apart about said axis to define pie-shaped openings.

8. A process as claimed in claim 4 in which the flow of fluid is directed by a plurality of nozzles arranged along a radial line with the rate of fluid flow through the nozzles increasing in proportion to the distance of the nozzles from the centre of the annular processing zone.

9. A process as claimed in claim 4 in which the circulating particles are accelerated by the gas flow from the inner bed area in both vertical and horizontal directions to travel tangentially of the circumferential flow until such accelerated particles lose their energy and settle into the circumferentially flowing bed and by displacement are returned inwardly of the bed along the processing zone base so that all particles in the bed are exposed to processing gates to provide for uniform and rapid processing of the particles.
